# EUROPEAN PATENT SPECIFICATION

(11) **EP 3 712 664 B1**
(45) Date of publication and mention of the grant of the patent: **25.11.2026**
(21) Application number: 20159334.0
(22) Date of filing: 25.02.2020
(51) Int. Cl.: G02B 5/30, G02B 27/28, H01S 3/06, H01S 3/08

(54) **DEPOLARIZATION COMPENSATOR**
DEPOLARISATIONSKOMPENSATOR
COMPENSATEUR DE DÉPOLARISATION

(30) Priority: 20.03.2019 LT 2019504
(43) Date of publication of application: 23.09.2020
(73) Proprietor: UAB "EKSPLA", 02300 Vilnius (LT)
(72) Inventor: Michailovas, Andrejus, LT-02300 Vilnius (LT)
(74) Representative: Zaboliene, Reda

(56) References cited:
- EP-A1- 2 965 852
- US-B2- 7 085 303
- YASUHIKO SHIMOTSUMA ET AL: "Ultrafast Manipulation of Self-Assembled Form Birefringence in Glass", ADVANCED MATERIALS, vol. 22, no. 36, 22 September 2010 (2010-09-22), DE, pages 4039 - 4043, XP055397318, ISSN: 0935-9648, DOI: 10.1002/adma.201000921

## Description

### Field of the invention

This invention is related to optical elements for light polarization control, namely, spatially variable polarization control. In particular, this invention relates to optical elements for compensation of light depolarization originating from birefringence induced by temperature gradient in optical elements (laser crystals, laser glasses, Faraday isolators, etc). The invention also relates to microstructured optical elements with a spatially variable birefringence inscribed by the ultrafast laser direct writing technique.

### Background of the invention

Thermal gradients induce mechanical stress and thus birefringence in laser optical elements. This is particularly relevant to active elements of laser systems. Difference of refractive indices for two orthogonal polarization components causes bifocusing and change of polarization state of light traversing said element. The principal axes of induced birefringence depend on temperature gradients directions; for cylindrical elements coincide with the radial and tangential (perpendicular to radial) directions in an optical element cross-section. If a laser system contains polarization sensitive elements or the laser beam is used in nonlinear wavelength conversion, the depolarized light is rejected or beam depolarization negatively influences nonlinear conversion efficiency. Polarization cleaning with polarizers leads to power losses and degradation of the beam quality due to a spatial variation of light depolarization.

Influence of stress birefringence on light polarization state can be neglected only in materials with a strong natural birefringence. In naturally optically isotropic materials, such as widely used Nd:YAG and Yb:YAG laser crystals, depolarization reduces output energy/power and severely influences beam spatial profile. There are several methods for reduction of depolarization losses in laser systems. The majority of them are based on compensation of laser optical elements' depolarizing influence, i. e. on restoration of the initial polarization state.

A degree of stress birefringence and a value of depolarization losses depends on a temperature difference between a central part of the laser element (the hottest one) and a surface which is in contact with a cooler (the coldest one). This difference, i.e. temperature gradient, depends on the optical and/or thermal load and dimensions of the crystal, crystal thermal conductivity, as well as temperature of a coolant. A typical value of depolarization losses in laser systems employing heavily pumped [111]-oriented Nd:YAG cylindrical rods is in the range from 20% to 30% (in layouts without depolarization compensation). [100]- and [110]-oriented Nd:YAG crystals intrinsically have lower values of stress tensor (for certain polarization directions) than a widely used [111]-oriented crystal. European patent EP1478061 provides a solid-state laser with high-power pumping which comprises a [110]-oriented crystal rod. Authors of said patent found that depolarization can be reduced significantly when using the [110]-oriented rod - in comparison with the [111]-cut rod - if the beam radius is small. In the [110]-cut crystal for the beam radius less than 1/4 of the rod radius, the depolarization losses can be reduced by more than one order as compared to that of the [111]-cut crystal. The restriction to use only a small part of the active medium is impractical in high-power side-pumped lasers since leads to low total system efficiency. O. Puncken et al., "Intrinsic reduction of the depolarization in Nd:YAG crystals," Opt. Express 18, 20461-20474 (2010) and H. Tünnermann et al., "Linearly polarized single-mode Nd:YAG oscillators using [100]- and [110]-cut crystals," Opt. Express 19, 12992-12999 (2011) state that for pump powers less than 2kW the least depolarization is achieved in a [100]-cut crystal. They have shown that the [100]-cut YAG has 6 times less depolarization than [111]-cut YAG for a certain polarization direction of the impinging laser beam. But bifocusing still exists and forms an elliptical beam intensity profile.

US4848881 provides a thermal lens and birefringence compensator which comprises a cylindrical body of optical material thermally coupled to a heat exchange means and a heat sink which adds heat to the exterior surface of said cylindrical body. The compensator is placed within a laser cavity, and the heat is added to said cylindrical body at the same rate at which a pump flashtube stimulates the laser rod. Radial thermal gradients with the central part cooler than the surface form within the cylindrical body of the compensator. This means that a dynamic lens of opposite power to that of the laser rod and birefringence of opposite action is created. Thus beam convergence or divergence problems can be solved and depolarization losses substantially reduced. The compensator may be constructed using a commonly available optical material known commercially as a BK-7 glass. The major drawback of this solution is that it has a temporal action. The compensation is achieved only for a short time interval - until a center of the compensating cylindrical body heats up. When temperature gradients vanish, the compensation does not occur. Pauses (when heat is not added to the exterior surface of the compensator cylindrical body) for the compensator to cool must be done. Authors state this compensator can be placed within a resonator operating in a rate of 10 to 20 pulses per second.

I. L. Snetkov et al., "Effect of full compensation of thermally induced depolarization in two nonidentical laser elements," Opt. Lett. 41, 2374-2377 (2016) demonstrates a possibility of compensating thermally induced depolarization in a laser system with two active media based on different matrices: glass and single crystal with [111] orientation, or glass and ceramics. Compensation is based on an opposite response to thermal gradient (opposite sign of thermo-optical coefficient) of said materials. The task is to create similar thermal gradients. Reduction of depolarization by a factor of 4.6 was demonstrated at the power of 200W.

Most widely used compensation methods comprise beam propagation in the same active media - two identical laser rods or a single laser rod on forward and backward directions. W. C. Scott and M. de Wit, "Birefringence compensation and TEM00 mode enhancement in a Nd:YAG laser," Appl. Phys. Lett. 18, 3-4 (1971) demonstrated the depolarization reduction using two laser rods with a 90-degree optical rotator between them. A quartz or magneto-optical (Faraday) rotator can be used. A half-wave plate also works up to some power regime. An idea is to equalize phases of a radial and tangential polarization components at the output of laser system. It can be done by changing radial polarization component to tangential, and vice versa, just before the laser beam impinges the second identically pumped laser rod of the double-rod laser system. Although the induced birefringence is effectively compensated and depolarization losses decrease down to several percent, this scheme requires two laser modules with identical pumping and cooling conditions. Another important task is to ensure the same propagation trajectories in both laser rods. In amplification configuration, one of the active media operates in unsaturated regime; this does not allow to extract the stored energy efficiently. Similar depolarization compensation in a double-pass single-rod configuration of the laser system is also known (see I. D. Carr and D. C. Hanna, "Performance of a Nd: YAG oscillator/ampflifier with phase-conjugation via stimulated Brillouin scattering," Appl. Phys. B 36, 83-92 (1985); J. S. Shin et al., "Compensation of the thermally induced depolarization in a double-pass Nd:YAG rod amplifier with a stimulated Brillouin scattering phase conjugate mirror, " Opt. Communications 283, 2402-2405 (2010)). A 45-degree optical rotator placed between the laser rod and a back-reflecting mirror, performs rotation by 90 degrees of both polarization components after two passes of the laser beam through it. Compensation occurs at the same laser rod. Although a need for another laser module is avoided, a requirement for the same optical path on the way forwards and backwards is hard to fulfill. Enhanced depolarization compensation schemes comprise tilted rotators, relay imaging optics, phase conjugating elements, special rules for element positions, etc. For more information, see W. Koechner book "Solid-State Laser Engineering" (Springer Science & Business Media; 2006), patents US3928818, US5504763 and I. Moshe et al., "Correction of thermally induced birefringence in double-rod laser resonators - comparison of various methods", Opt. Communications 214, 315-325 (2002). High power systems require costly vacuum cells in image relay modules and large space for their installation. By adopting an optimized lens configuration which differs from a traditional telescope image system, Y. Wang et al., "Birefringence compensation of two tandem-set Nd:YAG rods with different thermally induced features", J. Opt. A: Pure Appl. Opt. 11, 125501 (2009) demonstrated depolarization compensation between two differently thermally loaded laser media. Application of a similar solution in an oscillator-amplifier sequence was presented in EP0383638.

Yet another class of light depolarization compensators are based on averaging of depolarization loss throughout the cross section of the beam. The active medium is placed between two quarter waveplates. Thus a circularly polarized laser radiation propagates through the active medium. As a results, an impact on polarization at various coordinates of the beam is similar because of an axial symmetry of both - the circular polarization of the beam and the induced birefringence pattern of the thermally loaded active medium. Gaussian-like beam profiles may be achieved in low power or moderate power systems, however, depolarization losses even increase - may exceed 30%. In high power systems, the beam profile has multiple rings.

US7085303 suggests a birefringent lens could be used as a thermal lens depolarization compensator by forming a proper curvature of the exterior surfaces. The amount of birefringence (retardance) provided is proportional to the thickness of the birefringent lens and the material used. The challenge is to manufacture a required curvature with high precision. Many manufactures of optical components can provide λ/10 precision for flat waveplates. However, a precision of retardance depends on total material thickness and is hardly controllable during manufacturing. Moreover, retardance and lensing cannot be controlled independently. Finally, the birefringent lens is sensitive to misalignments and angular changes, because it is curved.

FR2679386 suggests a possibility of depolarization compensation in an element from birefringent material which has flat surfaces or surfaces with suitable curvature (front and back surfaces parallel to each other). The idea is based on an opposite birefringence pattern in the compensating material if its optical axis is parallel to beam propagation and the impinging beam has a proper convergence or divergence. Axial rays of the laser beam are parallel to the optical axis of said compensating element and experience equal indices of refraction (no birefringence). While peripheral rays of the laser beam are inclined with respect to the optical axis of said compensating birefringent element and split into two orthogonally polarized laser beams experiencing different phase retardation. The task is to achieve a proper ray inclination (beam convergence or divergence) at the input of the compensating element in order to perform depolarization compensation for all rays at various radial positions in a cross-section of the laser beam. A length of the compensating element is also important. Implementation of this solution may require an additional lens interposed between the laser rod and the compensating optical element to adjust convergence (or divergence) for complete depolarization compensation. It is practical only for low power lasers. No examples of realization were given in FR2679386.

The thermally loaded active medium has higher temperature in a central part and lower at periphery. The cylindrical laser rod with homogeneously cooled external surface has an axial symmetry of the temperature gradient and the induced birefringence. In axial symmetry cases, retardance between radial and tangential polarization components is a quadratic function of radial distance from a center of the rod. Ideal depolarization compensator should feature a birefringence pattern exactly cancelling the birefringence pattern created in the laser rod.

A fast growing microstructuring sector provides variety of possibilities for engineering a distribution of some material property in order to have a coordinate-dependent action on the impinging laser beam. Microstructured elements - such as those having structured surface, structurally modified volume, specially aligned liquid crystals, metamaterials, etc. - have been developed for various purposes.

Two decades ago, it was observed a possibility to inscribe a uniaxial birefringence in a volume of a fused silica sample with femtosecond laser pulses, see L. Sudrie et al., "Writing of permanent birefringent microlayers in bulk fused silica with femtosecond laser pulses", Opt. Communications 171, 279-284 (1999). Several years later, a reason of that was revealed - self-assembly of the material occurs and a sub-wavelength periodic structure form in a focal zone of ultrashort radiation (see Y. Shimotsuma et al., "Self-organized nanogratings in glass irradiated by ultrashort light pulses", Phys. Rev. Letters 91 (2003)). An induced structural periodicity exhibits form-birefringence, i. e. refractive indices for two orthogonal polarization components become different. The sub-wavelength periodic structure, called self-assembled nanogratings, double-refracting nanogratings or just nanogratings, acts as a uniaxial optically anisotropic material introducing a phase retardation between two orthogonal polarization components oriented along fast and slow axes. The technique is called an ultrafast laser direct writing. Numerous parameters - pulse duration, wavelength, energy of the writing radiation, as well as focusing conditions, also orientation of already inscribed nanogratings in adjacent regions - govern formation of self-assembled nanogratings and retardance achieved. Orientation of nanogratings is controlled by varying a polarization direction of the writing laser beam.

Y. Shimotsuma et al., "Ultrafast Manipulation of Self-Assembled Form Birefringence in Glass", Advanced Materials 22, 4039-43 (2010) analyses the ultrafast laser direct writing in double-pulse and multiple-pulse experiments. It has been shown that formation of nanogratings itself is of electronic origin and takes place in the picosecond scale, while the nanogratings direction is defined during light interaction with plasma and is in the femtosecond scale. Rewriting of nanogratings and retardance accumulation up to some level was demonstrated. Apart from fundamental understanding, the authors demonstrate an application for rewritable 5D optical data storage. Five dimensions are: three spatial coordinates, the nanogratings orientation (angle resolution of 4.7° demonstrated) and retardance (with 5nm resolution). For encoding information, any combination of orientations and retardances (up to the highest achievable retardance value per layer) may be needed.

An international patent application WO2012150566 (M. Beresna et al.), which was also published as a European patent application EP2705393 and has got a granted US10156669 patent, describes a microstructured polarization converter for conversion of an incident linearly or circularly polarized light into radially or azimuthally polarized light. The microsctructuring is based on inscription of a spatially variable birefringence by the ultrafast laser direct writing of nanogratings. The idea of the Beresna et al. solution lies in that a constant retardance (half-wave or quarter-wave) and different orientations of the nanogratings at various transverse coordinates is inscribed. This results in a spatially variable impact on local polarization of the traversing laser beam. An orientation distribution of nanogratings, required for the above mentioned tasks, is given. There are no suggestions for polarization converter's configuration for other than visible wavelengths and other than conversion form linear/circular to radial/azimuthal polarization tasks.

A great variety of other microstructured optical elements based on said inscription of sub-wavelength nanogratings is overviewed in R. Drevinskas and P. G. Kazansky, "High-performance geometric phase elements in silica glass", APL Photonics 2, 066104 (2017); M. Beresna et al., "Ultrafast laser direct writing and nanostructuring in transparent materials", Advances in Optics and Photonics 6, 293 (2014). However, neither of said prior art microstructured optical elements are used for depolarization compensation.

The closest prior art of this invention is a European patent EP2965852 (filed by the applicant of the present invention; authors: T. Gertus and A. Michailovas). It provides an optical arrangement for laser beam shaping, a base element of which is a microstructured polarization converter fabricated by the means of said ultrafast laser direct writing. The microstructured polarization converter which has a spatially variable birefringence is fabricated from a transparent and optically isotropic material by forming in-volume at least one anisotropic layer with double-refracting nanogratings. The microstructured polarization converter and a polarization analyzing optical element arranged sequentially on a path of a linearly polarized laser beam together contribute to spatially variable power losses and form a desired beam profile. As in the *Beresna et al.* solution, the spatially variable birefringence comprises a constant retardance and different orientations of said double-refracting nanogratings at various positions of the converter's cross-sectional area. A difference from the *Beresna et al.* solution is that the pattern of nanogratings orientations is estimated from a laser beam profile which is intended to be formed. A recipe of the spatially variable birefringence pattern in order to shape a super-Gaussian beam profile from a Gaussian profile is given: a constant half-wave or quarter-wave retardance is required and an axially symmetric M-shaped profile of nanogratings' fast axes orientations is needed. The configuration with the quarter-wave retardance inscribed needs an additional ordinary quarter-wave plate. The solution is suitable for wavelengths from visible to infrared spectral range. In order to attain half-wave or quarter-wave retardance several layers of nanogratings may be required. The solution has many advantages, however, is adapted for specific beam shaping goals.

None of the known microstructured elements have a proper birefringence pattern for the purpose to compensate the depolarization of the laser beam traversing thermally loaded optical elements. The aim of this invention is to provide a compact optical element for depolarization compensation in laser systems. Particularly, it is an aim of this invention to provide the depolarization compensator suitable for high-power and high repetition rate laser systems. It is yet another aim of this invention to provide a recipe of a spatially variable birefringence control for restoration of polarization disturbed by thermally loaded laser active media or any optical element which depolarizes laser radiation due to any reasons (absorption, mechanical stress or natural birefringence). Compensation of depolarization is particularly relevant for laser systems in which radiation fills up almost the whole aperture of the laser rod. It is the case in unstable laser resonators and high-power linear amplifiers.

### Summary of the invention

The essence of the present invention is utilization of an element featuring a spatially variable polarization control, which is fabricated by the ultrafast laser direct writing technique, to compensate the light depolarization in optical systems. Also, the essence of the present invention is determination of orientations of the double-refracting nanogratings and retardance in various transverse coordinates required for depolarization compensation.

According to the present invention, a depolarization compensator according to claim 1 and utilizations according to claims 6, 7, 8 and 9 are provided.

In a preferred embodiment of the present invention, the thermally loaded optical element is a cylindrical laser rod with a radial temperature gradient. Orientation of the sub-wavelength double-refracting nanogratings depends only on an azimuthal angle in the microstructured optical element's cross-sectional area, while a value of phase retardation between two orthogonal polarization components of the laser beam traversing said microstructured optical element depends on a radial distance from the microstructured optical element's center only. In a particular embodiment of the present invention, fast axes of the sub-wavelength double-refracting nanogratings are oriented along a tangential direction in the microstructured optical element's cross-sectional area, forming a pattern of concentric circles, while dependence of the phase retardation value on a radial distance from the microstructured optical element's center is a parabolic function.

A wavelength of a laser beam traversing the microstructured optical element (16) is within a transparency range of silica. (SiO₂ glass). Said transparent and optically isotropic material, from which the microstructured optical element is fabricated, is SiO₂ glass, TiO₂:SiO₂ glass, GeO₂ glass, porous SiO₂ glass, borosilicate glass, or YAG crystal.

The main advantages of the compensator of the present invention is reduction of power losses due to the depolarized light and beam quality enhancement simultaneously. The compensator may be employed in high-power laser systems since is absorptionless and has high damage threshold. It introduces less than 1% of insertion losses, if antireflection-coated. It is thermally and mechanically stable, does not require complex adjustments, is simple and compact (occupies minimum space). Moreover, it reduces a number of optical elements required in a laser system to attain comparable features of output radiation. Thus decreases mechanical complexity, improves stability and reduces a price of the laser system. The depolarization compensator of the present invention is suitable for laser with unstable resonator configuration. It can be used as outside, as inside the resonator. It is particularly suitable for high-power linear amplifiers. In principal, it is applicable to compensate depolarization occurring at any element, e. g. Faraday rotator, of laser layouts that operates under thermal (or optical) load. Its action is permanent, there are no restrictions on laser power or pulse repetition rate. The compensator designed for a certain wavelength works in a spectral range of about several tens of nanometers. The compensator designed for a particular thermal load operates efficiently at ±15% thermal load span.

The invention is explained in greater detail in the following drawings.

### Brief description of the drawings

Fig.1A - a front view of a cylindrical rod of active medium within a laser module.
Fig.1B - a typical temperature profile in the thermally loaded cylindrical laser rod of Fig.1A.
Fig.1C - a map of refractive indices in a thermally loaded [111]-cut Nd:YAG or Yb:YAG crystalline rod.
Fig.1D - illustration of polarization transformation in the thermally loaded [111]-cut Nd:YAG or Yb:YAG crystalline rod.
Fig.2 - optical layout, comprising the laser rod and a polarizer, without depolarization compensation.
Fig.3 - polarization patterns of depolarized laser beam before and after the polarizer and spatial beam profiles transmitted and reflected by the polarizer for the case of a moderate thermal load of the laser rod.
Fig.4 - spatial beam profiles transmitted and reflected by the polarizer for the case of a heavy thermal load of the laser rod.
Fig.5 - laser system with the laser rod, the polarizer and the polarization compensator according to this invention.
Fig.6 - fast axes orientations and retardance profile in the thermally loaded [111]-cut Nd:YAG or Yb:YAG crystalline laser rod and a fast axes pattern inside the depolarization compensator according to this invention.
Fig.7 - a preferred embodiment of this invention - the depolarization compensator fabricated by the ultrafast laser direct writing technique.
Fig.8 - a cross-polarized image of the fabricated depolarization compensator.
Fig.9 - example of incorporation of the depolarization compensator of this invention in a stable laser resonator.
Fig.10-Fig.11 - examples of incorporation of the depolarization compensator of this invention in unstable laser resonators.
Fig.12 - example of incorporation of the depolarization compensator of this invention in an optical layout comprising linear amplifiers.

### Description of the preferred embodiments

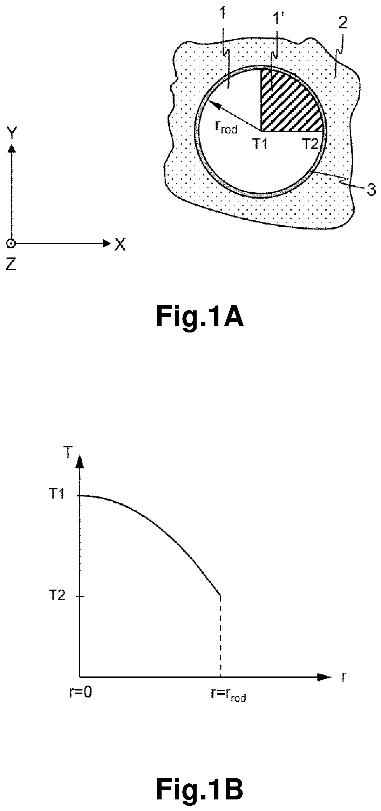

Fig.1A depicts a front view of a cylindrical rod 1 of an active medium within a laser module 2. In transverse pumping schemes, the laser module 2 comprises a pump means for effective coupling of a pump light into the active rod 1 (not shown in Fig.1A). Another important purpose of the laser module 2 is effective cooling of the active rod 1. The active rod 1 may be immersed into a coolant 3 (the coolant flows along the cylindrical rod surface) or tightly fixed within a thermally conductive holder with cavities for coolant flow. During laser operation, the generated heat is removed from the rod through its side surface, and the periphery is always colder than a central portion of the rod (T2<T1). Assuming an axially symmetric case (homogeneous heat distribution and removal) only a part 1' of the rod 1 may be analyzed.

Fig.1B depicts a typical temperature dependence on a transverse coordinate of the homogeneously pumped laser rod starting from a hotter center (r=0) and going towards a side surface (r=r_{rod}) which is in direct contact with a cooling medium. In case of a homogeneous material, the temperature profile is parabolic. For the cylindrical laser rod 1, it is the same for all azimuthal angles (axial symmetry) considering a homogeneous heat removal through its side surface.

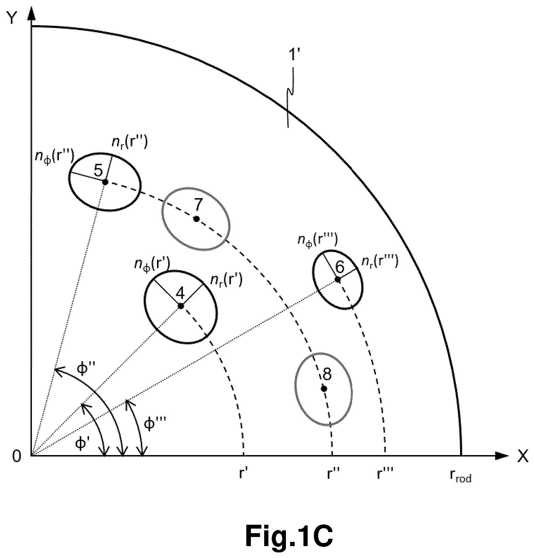

Fig.1C depicts a part 1' of the thermally loaded cylindrical laser rod 1 (see Fig.1A) and a map of indicatrices (refractive indices) in the rod 1 is a [111]-cut Nd:YAG or Yb:YAG. Axes of local birefringence are oriented along radius (radial refractive index *n*ᵣ) and orthogonally to radius (tangential refractive index *n*_{ϕ}) of the rod. Values of refractive indices *n*ᵣ, *n*_{ϕ} for the radial polarization component and the tangential polarization component depend on the radial coordinate and are different. Both refractive indices *n*ᵣ, *n*_{ϕ} decrease with the growing radial distance but with different rate. As a result, a difference of refractive indices at a point 4 with coordinates (r'; ϕ') is less than at a point 5 with coordinates (r"; ϕ"). And a difference of refractive indices at the point 5 is less than at a point 6 with coordinates (r‴; ϕ‴). While differences of refractive indices at points 5, 7 and 8 located at the same radial distance are equal. Different indices of refraction lead to a phase shift between two orthogonal polarization components of the light. Birefringence is defined as a difference between *n*_{ϕ} and *n*ᵣ. Phase retardation (or retardance) between two polarization components is defined as optical path difference expressed in wavelength units - a fraction of λ or nanometers.

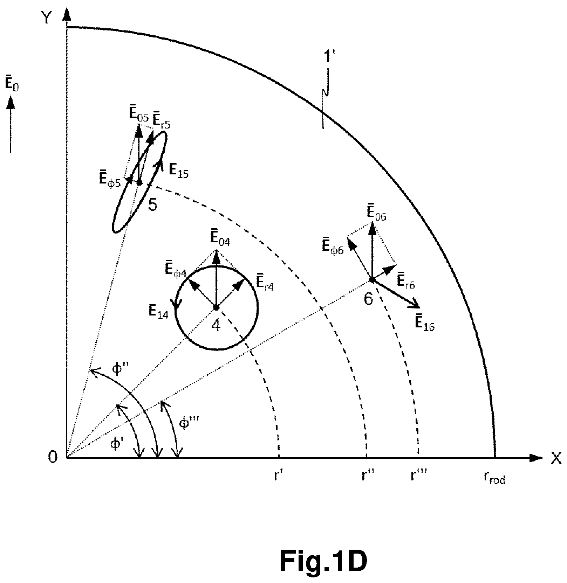

Fig.1D depicts polarization transformation of an initial linear polarization **E̅**₀ into circular, elliptical or rotated linear polarization at the three discussed points 4, 5 and 6. An initial polarization state is identical at all positions in the rod's 1 aperture (denoted as **E̅**₀₄, **E̅**₀₅, **E̅**₀₆). Amplitudes of the radial and tangential polarization components (denoted as **E̅**ᵣ₄, **E̅**ᵣ₅, **E̅**ᵣ₆ and **E̅**_{ϕa}, **E̅**_{ϕ5}, **E̅**_{ϕ6}) depend on the azimuthal angle. The spatially variable birefringence modifies initially linear polarization to elliptical, circular and linear again. Output local polarization state at the point 4 is denoted as **E**₁₄, at the point 5 - as **E**₁₅, at the point 6 - as **E̅**₁₆. Initially linearly polarized laser beam acquires a complex polarization profile P_{XY1} while traversing the thermally loaded laser rod 1.

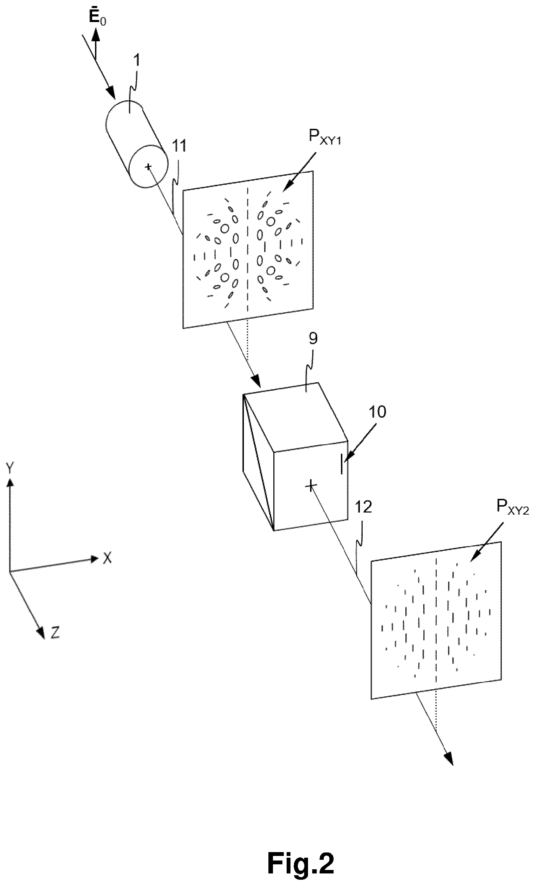

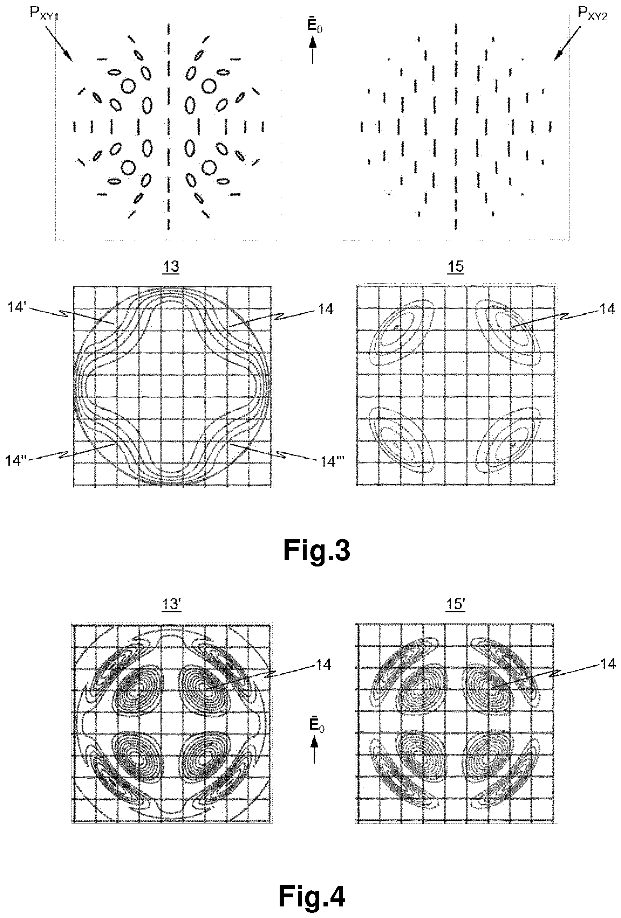

Fig.2 - Fig.4 illustrate an action of a polarizer 9 in an optical layout with the thermally loaded laser rod 1. These pictures provided just for illustration and do not represent all available in practice beam shapes. The polarizer 9, for example a Glan-Taylor prism, transmits only polarization parallel to its optical axis 10 (see Fig.2). A laser beam 11 at the output of the thermally loaded laser rod 1 has the polarization pattern P_{XY1}. A laser beam 12 at the output of the polarizer 9 (what is transmitted) has a polarization pattern P_{XY2} and an intensity distribution 13 (see Fig.3). Highest power loss is at angles of 45, 135, 225 and 315 degrees with respect to initial polarization direction **E̅**₀. At some zones (14, 14', 14", 14‴) of the cross-section intensity drops to zero. Intensity distribution 15 of the depolarized light reflected by the polarizer 9 have maxima at these zones. Distributions 13 and 15 are complementary. In case of intense pumping (the laser rod 1 is heavily thermally loaded), multiple intensity minima could be observed in the distribution of the light transmitted by the polarizer 9, and accordingly multiple intensity maxima could be observed in the distribution of the light reflected by the polarizer 9 as illustrated in Fig.4 (distributions 13' and 15', respectively)

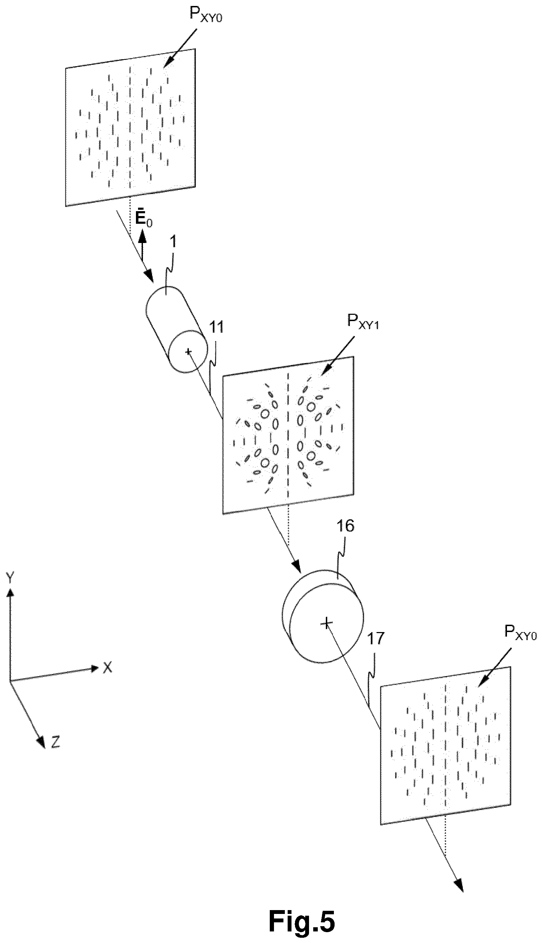

Fig.5 illustrates a goal of the present invention. It is an aim to have an optical element 16 which can be placed downstream from the laser rod 1 to compensate the depolarization of the laser beam 11. In the ideal case, a polarization pattern of the beam 17 at the output of the compensator 16 exactly coincides with an initial polarization pattern P_{XY0} at the input of the laser rod 1. Unequal lengths of vectors in the pattern P_{XY0} indicate a non-flattop beam profile circulating in the laser system. The depolarization occurring in the laser rod 1 is totally compensated. If a polarizer would be placed downstream from the depolarization compensator 16, there would be no depolarization losses.

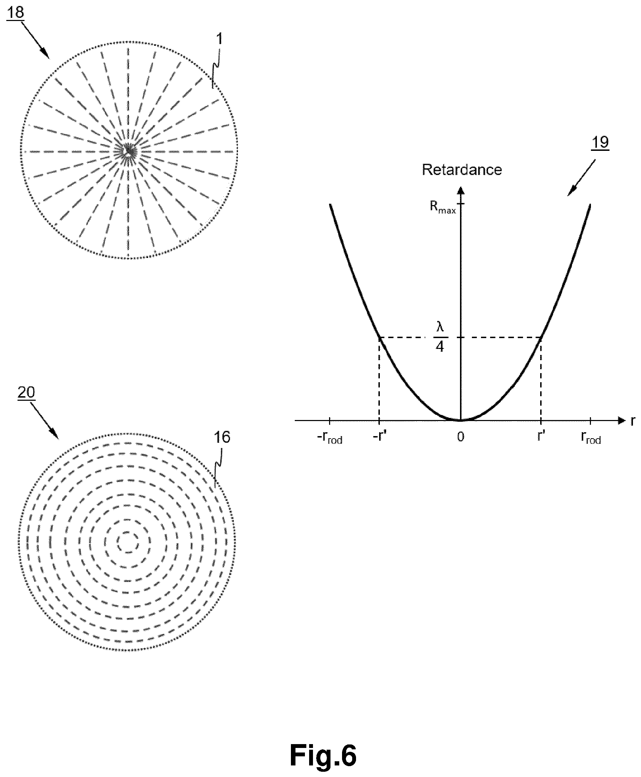

Fig.6 illustrates a method for total compensation of depolarization. Fast axes of local birefringence in the thermally loaded [111]-cut laser rod 1 are radially oriented (pattern 18) while the retardance is a parabolic function 19 on the radial distance from the rod 1 center. The highest retardance Rₘₐₓ that is created in the rod depends on the heat load, geometry and thermal conductivity of the rod, as well as on cooling arrangement. In order to compensate depolarization completely, one must create a spatially variable birefringence in a cross-section of the compensator 16 with retardance exactly repeating the function 19 while axes of local birefringence mutually switched. A required pattern 20 of fast axes in the compensator 16 is an axially symmetric map of arrows oriented along the tangential direction.

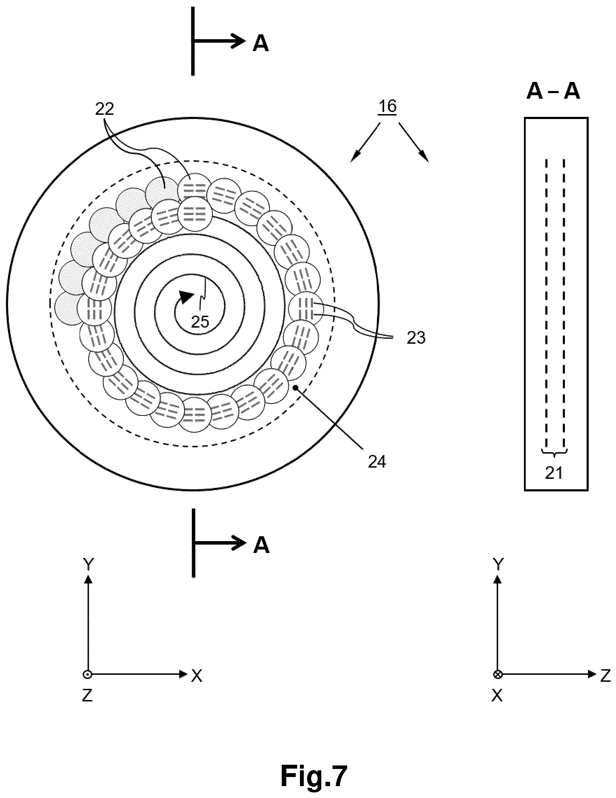

Fig.7 shows a preferred embodiment of the depolarization compensator 16 according to this invention. The compensator 16 is fabricated from a transparent and optically isotropic material by the means of ultrafast laser direct writing. By selecting a proper pulse energy (namely, intensity is important) and polarization direction of a writing femtosecond radiation, in-volume birefringent regions are formed. Said birefringent regions comprise sub-wavelength nanogratings which double-refract the light. The optically isotropic material, making a basis of the element 16, in which said birefringent regions are formed, preferably, is fused silica (SiO₂ glass). Other materials in which ultrashort laser pulses can induce form-birefringence are also suitable. A list of these materials includes fused silica doped with TiO₂ or other dopants, as well as GeO₂ glass, porous SiO₂ glass, borosilicate glass, also crystalline materials: quartz or YAG. The birefringent regions with the inscribed nanogratings introduce a phase shift between two orthogonal polarization components oriented along fast and slow axes of the nanogratings. Up to 350nm of retardance within a single layer may be inscribed. By controlling an orientation of the sub-wavelength nanogratings and amount of retardance, a desired local birefringence can be created.

One or more layers 21 of birefringent regions 22 are inscribed in a volume of the sample from which the optical element 16 is fabricated. Each said birefringent region 22 consists of multiple sub-wavelength nanogratings. Orientation of the writing beam linear polarization is controlled according to the prescribed pattern 20 (fast axes 23 align parallel to the polarization of the writing beam). Other writing conditions - pulse energy, focusing parameters, pulse repetition rate, scanning speed -are adjusted to attain the required retardance profile 19. A pattern of nanogratings orientations is formed by scanning an area 24 of the sample. Transversal dimensions of said area 24 may be larger than a size of the traversing laser beam in order to avoid hard aperture effect. A preferred dimension of the compensator area 24 is 10-20% larger than the laser beam size, which contains 99% of power/energy. At a focus of the writing radiation, a region 22 of the sample having a size from 10 to 100 microns is affected. All nanogratings in any region 22 have the same orientation. A length of the focal region of the writing radiation determines a thickness of the anisotropic layer 21. A desired pattern 20 of nanogratings' fast axes 23 orientations is inscribed by controlling polarization of the writing ultrafast radiation during a scanning operation of the sample. The inscribed nanostructure remains inside the sample after writing operation and is highly persistent to environmental impacts. Several scanning trajectories are possible, for example, a spiral trajectory 25 may be used. Retardance of more than 350nm is attained by inscribing several anisotropic layers 21. The second and other layers are inscribed by focusing the writing radiation in a different depth of the sample. A total thickness of the anisotropic layers 21 is such that sum retardance between two orthogonal polarization components varies according to the estimated retardance profile 19. Each of the regions 22 may also be written by a sequence of pulses, for example, doublets of pulses. Although there are power losses associated with Rayleigh scattering due to refractive index inhomogeneities inscribed by the writing laser beam, these losses are approximately the same throughout a cross-section of the beam and do not exceed 1%.

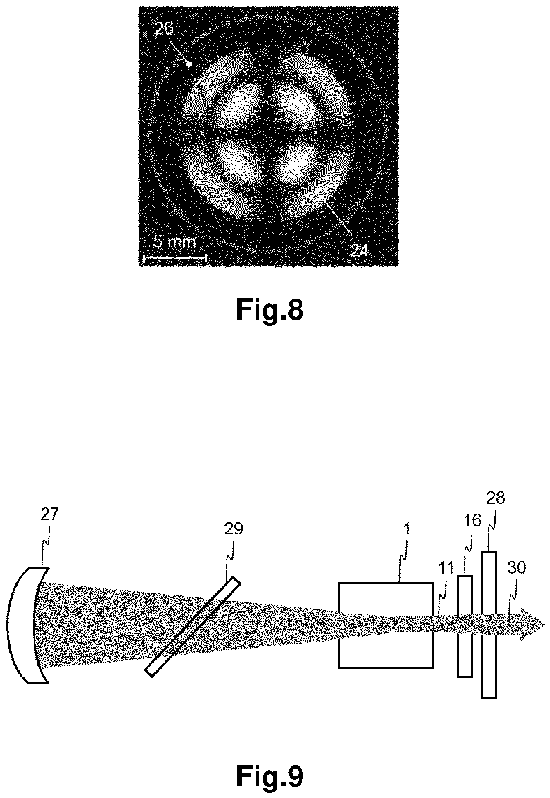

Fig.8 is an image of a real fabricated depolarization compensator 16 with an inscribed retardance profile similar to 19 of Fig.6, with Rₘₐₓ=550nm. The image was taken by placing the element 16 between two crossed polarizers. An unaffected zone 26 of the fused silica sample is dark, and the scanned area 24 is bright except lines parallel and perpendicular to optical axes of the polarizers. A diameter of the scanned area 24 is 20% larger than laser rod diameter.

Figs.9-12 illustrate incorporation of the depolarization compensator of this invention in optical layouts of laser systems. In Fig.9, an example of a stable laser resonator is depicted. The resonator comprises two end mirrors 27, 28, wherein one of the end mirrors is partially transmissive and serves as an output coupler. In a hemispherical resonator configuration, the laser rod 1 is positioned near the flat end mirror 28. The best place to place the depolarization compensator 16 is immediately behind the laser rod 1. Polarization of the laser beam 11 at the output of the thermally loaded laser rod 1 is restored by the depolarization compensator 16 of this invention. On the way back, polarization of the laser beam is precompensated by the compensator 16 before the pass through the laser rod 1. Placing of the depolarization compensator 16 in front of the laser rod 1 is another option. At an ideal compensation case, no depolarized light is reflected by a polarizer 29, so there are no depolarization losses and the output laser beam 30 is purely linearly polarized with a circularly symmetric beam intensity profile. Depolarization compensation can be performed without the need of another identical gain module thus reduces complexity and potentially a price of a system, also increases efficiency.

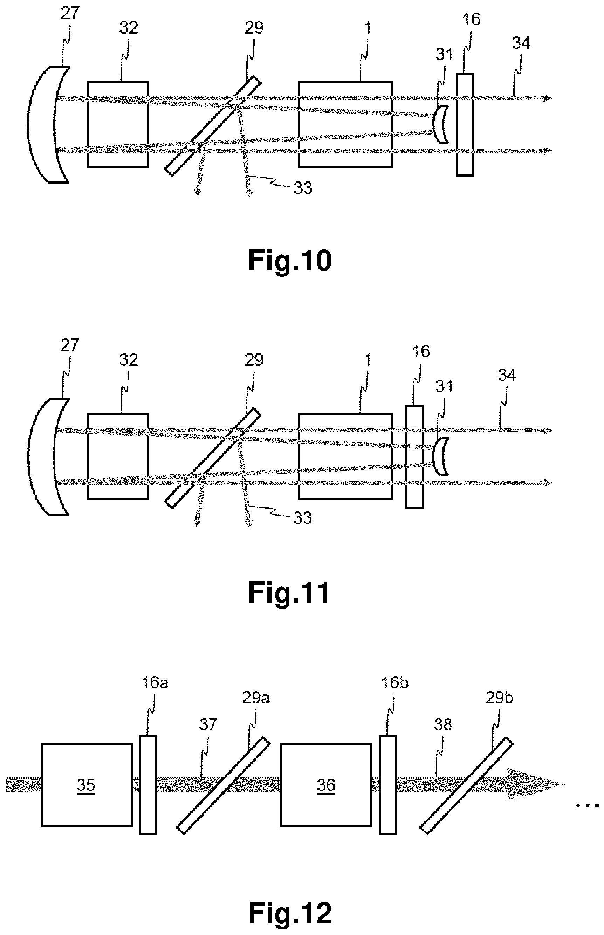

Fig.10 and Fig.11 depict a laser with an unstable resonator configuration which comprises the laser rod 1 placed between highly reflective concave and convex end mirrors 27, 31. An enhanced configuration comprises the convex mirror 31 with a radially varying reflectivity. A Pockels cell 32 and the polarizer 29 are used for Q-switching and nanosecond pulses generation. In a traditional operation mode (without depolarization compensation), the depolarized light 33 is reflected by the polarizer 29. The depolarization compensator 16 of this invention can be used outside the laser resonator (Fig.10). In this case a depolarization acquired during last pass through the thermally loaded laser rod 1 is compensated. During the last pass, the beam has the largest diameter and crosses edges of the laser rod's 1 aperture where the largest induced birefringence is. Using the external depolarization compensation in the unstable resonator nanosecond laser more than 10% increase in total laser energy was achieved. Profile improvement of the output beam 34 is another advantage of the laser of Fig.10. Circular beam of a super-Gaussian profile with linear polarization was generated. This beam shape and pure polarization state are very favorable for nonlinear wavelength conversion via the second harmonics generation and optical parametric generation. For minimization of the depolarized light losses from the polarizer 29, the depolarization compensator 16 could be inserted inside the resonator (Fig.11). The best place to place the depolarization compensator 16 is near the output of the laser close to the end mirror 31. The laser beam after each double pass comes back to the laser rod 1 with a certain magnification determined by resonator design. The depolarization compensator can restore polarization of light circulating in the resonator.

Fig.12 demonstrates yet another application of the depolarization compensator 16 of the present invention. It is used for polarization state across the beam profile restoration at the output of a linear single-pass or double-pass amplifier. High power linear amplifiers usually operate at gain saturation regime and under heavy thermal load conditions. Laser beam tends to fills up the whole pumped aperture of the active medium and thus possess a complex depolarization pattern in an output beam profile. In Fig.12, a chain of two linear amplifiers 35, 36 is depicted. Each amplifier 35, 36 is followed by the depolarization compensators 16a, 16b in order to avoid power when transmitted through polarizers 29a, 29b. At an ideal depolarization compensation case, output beams 37 and 38 cross the polarizers 29a, 29b without losses. Thermal load, sizes of the active media, diameter of laser beams inside the laser amplifiers may be different. The retardance profiles inscribed inside the depolarization compensators 16a, 16b are adjusted according to the retardation profile of each amplifier 35, 36. The required retardance profiles can be determined by several techniques: determined from thermal lens measurements, bifocusing measurements or direct measurements of polarization patterns by polarization sensitive cameras at the output of each thermally loaded active medium of the amplifiers 35, 36.

Description of the best implementation choices was given above in order to explain this invention. It is not a complete or limiting description specifying a precise mode of implementation. A variety of modifications and variations of this invention may be evident to those ordinary skilled in the art. The whole scope of protection of this invention is defined by the appended claims.

## Claims

1. DEPOLARIZATION COMPENSATOR comprising
a microstructured optical element (16) with a spatially variable birefringence fabricated from a transparent and optically isotropic material by the means of ultrafast laser direct writing;
by adjusting parameters of the linearly polarized femtosecond laser radiation, in-volume birefringent regions comprising sub-wavelength double-refracting nanogratings are formed;
by differently orienting fast axes of said sub-wavelength double-refracting nanogratings at various positions of the microstructured optical element's (16) cross-sectional area, the spatially variable birefringence is formed;
said spatially variable birefringence is described not only by different orientations of said sub-wavelength double-refracting nanogratings, but also by a spatially variable retardance between two orthogonal polarization components of a laser beam traversing said microstructured optical element (16);
**characterized in that**
said spatially variable birefringence of the microstructured optical element (16) is such that
orientation of the sub-wavelength double-refracting nanogratings depends only on an azimuthal angle in the microstructured optical element's (16) cross-sectional area, while a value of retardance between two orthogonal polarization components of the laser beam traversing said microstructured optical element (16) depends on a radial distance from the microstructured optical element's (16) center only.

2. DEPOLARIZATION COMPENSATOR according to claim 1,
**characterized in that**
said spatially variable birefringence of the microstructured optical element (16) is such that fast axes of the sub-wavelength double-refracting nanogratings are perpendicular to a radial direction, which is directed from the microstructured optical element's (16) center towards periphery of the microstructured optical element (16) forming a pattern (20) of concentric circles, while the dependence of the retardance value on the radial distance from the microstructured optical element's (16) center is a parabolic function (19).

3. DEPOLARIZATION COMPENSATOR according to any of the preceding claims,
**characterized in that**
a wavelength of the laser beam traversing the microstructured optical element (16) is within a transparency range of silica.

4. DEPOLARIZATION COMPENSATOR according to any of the preceding claims,
**characterized in that**
said transparent and optically isotropic material, from which the microstructured optical element (16) is fabricated, is fused silica.

5. DEPOLARIZATION COMPENSATOR according to any one of claims 1-3, **characterized in that**
said transparent and optically isotropic material from which the microstructured optical element (16) is fabricated is TiO₂:SiO₂ glass, GeO₂ glass, porous SiO₂ glass, borosilicate glass, or YAG crystal.

6. Utilization of the DEPOLARIZATION COMPENSATOR according to any one of claims 1-5 inside a cavity of a stable laser resonator to compensate depolarization of its thermally loaded laser rod (1), placing the microstructured optical element (16) of the depolarization compensator immediately behind said thermally loaded laser rod (1).

7. Utilization of the DEPOLARIZATION COMPENSATOR according to any one of claims 1-5 inside a cavity of an unstable laser resonator to compensate depolarization of its thermally loaded laser rod (1), placing the microstructured optical element (16) of the depolarization compensator in front of an outcoupling end mirror (31).

8. Utilization of the DEPOLARIZATION COMPENSATOR according to any one of claims 1-5 in a laser system comprising a laser with an unstable resonator configuration to compensate depolarization of a thermally loaded laser rod (1) of said laser with the unstable resonator configuration, wherein the depolarization compensator is placed outside the laser resonator.

9. Utilization of the DEPOLARIZATION COMPENSATOR according to any one of claims 1-5 to compensate depolarization of any thermally loaded optical element in a laser system comprising at least one single-pass or double-pass amplifier.

## Patentansprüche

1. Ein DEPOLARISATIONSKOMPENSATOR, umfassend
ein mikrostrukturiertes optisches Element (16) mit einer räumlich variablen Doppelbrechung, das aus einem transparenten und optisch isotropen Material mittels ultraschnellem direkten Laserschreiben hergestellt ist;
durch Anpassen von Parametern der linear polarisierten Femtosekunden-Laserstrahlung werden doppelbrechende Bereiche im Volumen gebildet, die doppelbrechende Sub-Wellenlängen-Nanogitter umfassen;
durch unterschiedliches Ausrichten der schnellen Achsen der besagten doppelbrechenden Sub-Wellenlängen-Nanogitter an verschiedenen Positionen der Querschnittsfläche des mikrostrukturierten optischen Elements (16) wird die räumlich variable Doppelbrechung gebildet;
die besagte räumlich variable Doppelbrechung wird nicht nur durch verschiedene Ausrichtungen der besagten doppelbrechenden Sub-Wellenlängen-Nanogitter beschrieben, sondern auch durch eine räumlich variable Verzögerung zwischen zwei orthogonalen Polarisationskomponenten eines Laserstrahls, der das besagte mikrostrukturierte optische Element (16) durchquert;
**dadurch gekennzeichnet, dass**
die besagte räumlich variable Doppelbrechung des mikrostrukturierten optischen Elements (16) derart ist, dass die Ausrichtung der doppelbrechenden Sub-Wellenlängen-Nanogitter nur von einem azimutalen Winkel in der Querschnittsfläche des mikrostrukturierten optischen Elements (16) abhängt, während ein Wert der Verzögerung zwischen zwei orthogonalen Polarisationskomponenten des Laserstrahls, der das besagte mikrostrukturierte optische Element (16) durchquert, nur von einem radialen Abstand zum Zentrum des mikrostrukturierten optischen Elements (16) abhängt.

2. Ein DEPOLARISATIONSKOMPENSATOR nach Anspruch 1,
**dadurch gekennzeichnet, dass**
die besagte räumlich variable Doppelbrechung des mikrostrukturierten optischen Elements (16) derart ist, dass die schnellen Achsen der doppelbrechenden Sub-Wellenlängen-Nanogitter senkrecht zu einer radialen Richtung stehen, die vom Zentrum des mikrostrukturierten optischen Elements (16) zur Peripherie des mikrostrukturierten optischen Elements (16) gerichtet ist und ein Muster (20) aus konzentrischen Kreisen bildet, während die Abhängigkeit des Verzögerungswertes von dem radialen Abstand vom Zentrum des mikrostrukturierten optischen Elements (16) eine parabolische Funktion (19) ist.

3. Ein DEPOLARISATIONSKOMPENSATOR nach einem der vorhergehenden Ansprüche,
**dadurch gekennzeichnet, dass**
eine Wellenlänge des Laserstrahls, der das mikrostrukturierte optische Element (16) durchquert, innerhalb eines Transparenzbereichs von Siliziumdioxid liegt.

4. Ein DEPOLARISATIONSKOMPENSATOR nach einem der vorhergehenden Ansprüche,
**dadurch gekennzeichnet, dass**
das besagte transparente und optisch isotrope Material, aus dem das mikrostrukturierte optische Element (16) hergestellt ist, Quarzglas ist.

5. Ein DEPOLARISATIONSKOMPENSATOR nach einem der Ansprüche 1 bis 3,
**dadurch gekennzeichnet, dass**
das besagte transparente und optisch isotrope Material, aus dem das mikrostrukturierte optische Element (16) hergestellt ist, TiO₂:SiO₂-Glas, GeO₂-Glas, poröses SiO₂-Glas, Borosilikatglas oder ein YAG-Kristall ist.

6. Verwendung des DEPOLARISATIONSKOMPENSATORS nach einem der Ansprüche 1 bis 5 innerhalb einer Kavität eines stabilen Laserresonators, um die Depolarisation seines thermisch belasteten Laserstabs (1) zu kompensieren, wobei das mikrostrukturierte optische Element (16) des Depolarisationskompensators unmittelbar hinter dem besagten thermisch belasteten Laserstab (1) platziert wird.

7. Verwendung des DEPOLARISATIONSKOMPENSATORS nach einem der Ansprüche 1 bis 5 innerhalb einer Kavität eines instabilen Laserresonators, um die Depolarisation seines thermisch belasteten Laserstabs (1) zu kompensieren, wobei das mikrostrukturierte optische Element (16) des Depolarisationskompensators vor einem auskoppelnden Endspiegel (31) platziert wird.

8. Verwendung des DEPOLARISATIONSKOMPENSATORS nach einem der Ansprüche 1 bis 5 in einem Lasersystem, das einen Laser mit einer instabilen Resonatorkonfiguration umfasst, um die Depolarisation eines thermisch belasteten Laserstabs (1) des besagten Lasers mit der instabilen Resonatorkonfiguration zu kompensieren, wobei der Depolarisationskompensator außerhalb des Laserresonators platziert wird.

9. Verwendung des DEPOLARISATIONSKOMPENSATORS nach einem der Ansprüche 1 bis 5, um die Depolarisation eines beliebigen thermisch belasteten optischen Elements in einem Lasersystem zu kompensieren, das mindestens einen Einzelpass- oder Doppelpass-Verstärker umfasst.

## Revendications

1. Un COMPENSATEUR DE DÉPOLARISATION comprenant
un élément optique microstructuré (16) doté d'une biréfringence spatialement variable, fabriqué à partir d'un matériau transparent et optiquement isotrope au moyen de l'écriture directe par laser ultrarapide;
en ajustant les paramètres du rayonnement laser femtoseconde polarisé linéairement, des régions biréfringentes dans le volume comprenant des nanoréseaux à double réfraction sous-longueur d'onde sont formées;
en orientant différemment les axes rapides desdits nanoréseaux à double réfraction sous-longueur d'onde à diverses positions de la section transversale de l'élément optique microstructuré (16), la biréfringence spatialement variable est formée;
ladite biréfringence spatialement variable est décrite non seulement par différentes orientations desdits nanoréseaux à double réfraction sous-longueur d'onde, mais aussi par un retard spatialement variable entre deux composantes de polarisation orthogonales d'un faisceau laser traversant ledit élément optique microstructuré (16);
**caractérisé en ce que**
ladite biréfringence spatialement variable de l'élément optique microstructuré (16) est telle que l'orientation des nanoréseaux à double réfraction sous-longueur d'onde dépend uniquement d'un angle azimutal dans la section transversale de l'élément optique microstructuré (16), tandis qu'une valeur de retard entre deux composantes de polarisation orthogonales du faisceau laser traversant ledit élément optique microstructuré (16) dépend uniquement d'une distance radiale par rapport au centre de l'élément optique microstructuré (16).

2. Un COMPENSATEUR DE DÉPOLARISATION selon la revendication 1,
**caractérisé en ce que**
ladite biréfringence spatialement variable de l'élément optique microstructuré (16) est telle que les axes rapides des nanoréseaux à double réfraction sous-longueur d'onde sont perpendiculaires à une direction radiale, qui est dirigée du centre de l'élément optique microstructuré (16) vers la périphérie de l'élément optique microstructuré (16) formant un motif (20) de cercles concentriques, tandis que la dépendance de la valeur de retard par rapport à la distance radiale depuis le centre de l'élément optique microstructuré (16) est une fonction parabolique (19).

3. Un COMPENSATEUR DE DÉPOLARISATION selon l'une quelconque des revendications précédentes,
**caractérisé en ce qu'**
une longueur d'onde du faisceau laser traversant l'élément optique microstructuré (16) se situe dans une plage de transparence de la silice.

4. Un COMPENSATEUR DE DÉPOLARISATION selon l'une quelconque des revendications précédentes,
**caractérisé en ce que**
ledit matériau transparent et optiquement isotrope, à partir duquel l'élément optique microstructuré (16) est fabriqué, est de la silice fondue.

5. Un COMPENSATEUR DE DÉPOLARISATION selon l'une quelconque des revendications 1 à 3,
**caractérisé en ce que**
ledit matériau transparent et optiquement isotrope à partir duquel l'élément optique microstructuré (16) est fabriqué est du verre TiO₂:SiO₂, du verre GeO₂, du verre SiO₂ poreux, du verre borosilicaté ou un cristal de YAG.

6. Utilisation du COMPENSATEUR DE DÉPOLARISATION selon l'une quelconque des revendications 1 à 5 à l'intérieur d'une cavité d'un résonateur laser stable pour compenser la dépolarisation de son barreau laser thermiquement chargé (1), en plaçant l'élément optique microstructuré (16) du compensateur de dépolarisation immédiatement derrière ledit barreau laser thermiquement chargé (1).

7. Utilisation du COMPENSATEUR DE DÉPOLARISATION selon l'une quelconque des revendications 1 à 5 à l'intérieur d'une cavité d'un résonateur laser instable pour compenser la dépolarisation de son barreau laser thermiquement chargé (1), en plaçant l'élément optique microstructuré (16) du compensateur de dépolarisation devant un miroir d'extrémité de couplage de sortie (31).

8. Utilisation du COMPENSATEUR DE DÉPOLARISATION selon l'une quelconque des revendications 1 à 5 dans un système laser comprenant un laser avec une configuration de résonateur instable pour compenser la dépolarisation d'un barreau laser thermiquement chargé (1) dudit laser avec la configuration de résonateur instable, dans laquelle le compensateur de dépolarisation est placé à l'extérieur du résonateur laser.

9. Utilisation du COMPENSATEUR DE DÉPOLARISATION selon l'une quelconque des revendications 1 à 5 pour compenser la dépolarisation de tout élément optique thermiquement chargé dans un système laser comprenant au moins un amplificateur à simple passage ou à double passage.
